# EUROPEAN PATENT SPECIFICATION

(11) **EP 4 458 888 B1**
(45) Date of publication and mention of the grant of the patent: **05.08.2026**
(21) Application number: 22915790.4
(22) Date of filing: 16.12.2022
(51) Int. Cl.: C08J 5/18, C08F 292/00, C08K 9/00, C08L 33/00, G02B 1/14, G02C 7/00

(54) **FILM, EYEGLASS LENS, AND COMPOSITION**
FOLIE, BRILLENGLAS UND ZUSAMMENSETZUNG
FILM, VERRE DE LUNETTE ET COMPOSITION

(30) Priority: 27.12.2021 JP 2021212399
(43) Date of publication of application: 06.11.2024
(73) Proprietor: Nikon-Essilor Co., Ltd., Tokyo 130-0026 (JP)
(72) Inventor: IGAMI Yuka, Tokyo 130-0026 (JP)
(74) Representative: Hoffmann Eitle
(86) International application number: PCT/JP2022/046511
(87) International publication number: WO 2023/127566

(56) References cited:
- EP-A1- 3 564 714
- WO-A1-2022/138287
- JP-A- 2004 069 760
- JP-A- 2005 533 879
- JP-A- 2008 257 160
- JP-A- 2009 062 510
- JP-A- 2009 221 350
- JP-A- 2016 532 162
- US-A1- 2005 228 072
- US-A1- 2016 266 286

## Description

### BACKGROUND OF THE INVENTION

The present disclosure relates to a film, a spectacle lens, and a composition.

### BACKGROUND ART

Patent Literature 1 discloses a hard coat layer formed by curing a composition including inorganic oxide particles, an organic silicon compound, and other components.

### CITATION LIST

### PATENT LITERATURE

Patent Literature 1: WO 2015/163465

### SUMMARY OF INVENTION

The present disclosure relates to a film comprising core-shell particles each having a core portion, a first shell portion covering the core portion, and a second shell portion covering the first shell portion, wherein the core portion contains inorganic oxide particles or silsesquioxane, the first shell portion contains a polymer chain A including one or more selected from the group consisting of acrylate-based polymer chains and methacrylate-based polymer chains, and the second shell portion contains a polymer chain B obtained by cationic polymerization of an oxetanyl group of an oxetanyl group-containing compound.

### BRIEF DESCRIPTION OF THE DRAWINGS

[FIG. 1] FIG. 1 is an example showing a presumptive cross-sectional structure of a core-shell particle.
[FIG. 2] FIG. 2 is an example showing a cross section of a spectacle lens.

### DETAILED DESCRIPTION OF THE INVENTION

A film of the present disclosure is described in detail below.

The film of the present disclosure is preferably used as a hard coat layer of a spectacle lens.

A hard coat layer of a spectacle lens is required to have low haze as well as excellent adhesion with a primer layer. The film of the present disclosure is applicable as a hard coat layer having the foregoing characteristics.

In the description, the term "to" means that numerical values given before and after "to" are included in the range as the lower and upper limits thereof.

In the description, halogen atoms include, for instance, a fluorine atom, a chlorine atom, a bromine atom, and an iodine atom.

In the description, halogenation includes, for instance, fluorination, chlorination, bromination, and iodination.

In the description, the term "(meth)acryl" is a concept covering both "acryl" and "methacryl", and the term "(meth)acryloyl group" is a concept covering both an acryloyl group and a methacryloyl group.

The term "solid(s)" in the present description refers to components other than a solvent, and even when a component takes on a liquid form at ordinary temperature and atmospheric pressure (25°C and 101.3 kPa), the component is calculated as a solid. A solid may be a component that chemically changes in the process of curing treatment.

However, when a composition, a mixture for living polymerization, and a mixture for cationic polymerization, which will be described later, contain a specific compound selected from the group consisting of surfactants that take on a liquid form at ordinary temperature and atmospheric pressure, living polymerization catalysts that take on a liquid form at ordinary temperature and atmospheric pressure, and promoters that take on a liquid form at ordinary temperature and atmospheric pressure, the amount of the specific compound is not included in solids in the composition, the mixture for living polymerization, and the mixture for cationic polymerization, which will be described later. For example, in the case of a composition composed of core-shell particles, a surfactant that takes on a liquid form at ordinary temperature and atmospheric pressure, and a solvent, only the amount of the core-shell particles corresponds to solids in the composition.

Components contained in the film are described in detail below.

### [Film]

### <Core-shell particles>

The film contains core-shell particles.

The core-shell particles each have a core portion, a first shell portion, and a second shell portion.

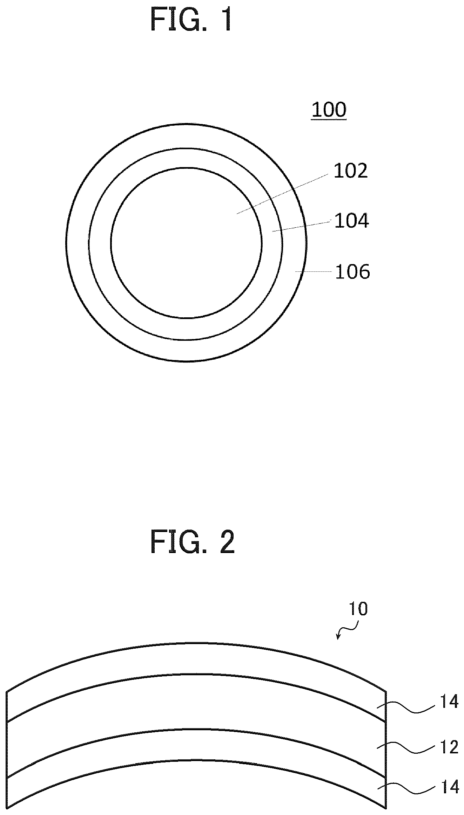

FIG. 1 is an example showing a presumptive cross-sectional structure of a core-shell particle.

A core-shell particle 100 is a particle having a core-shell structure and includes a core portion 102, a first shell portion 104 covering the core portion, and a second shell portion 106 covering the first shell portion. In FIG. 1, the thickness size relation between those portions is not limited to that illustrated in FIG. 1 and can be adjusted as needed. While, in FIG. 1, the entire surface of the core portion is covered with the first shell portion and the entire surface of the first shell portion is covered with the second shell portion, the surface of the core portion may be partially covered with the first shell portion, and the surface of the first shell portion may be partially covered with the second shell portion.

### (Core portion)

The core-shell particle has the core portion.

The core portion contains inorganic oxide particles or silsesquioxane (hereinafter also referred to as "inorganic oxide particles or the like").

Silsesquioxane to be described later is not included in the inorganic oxide particles.

The inorganic oxide particles or the like may have a functional group and/or a starting moiety in some cases as described later, and when the functional group and the starting moiety constitute a part of a polymer chain A, the functional group and the starting moiety are classified as the first shell portion. In other words, the core portion may be substantially composed only of metal and metal oxide. Specifically, the content of metal and metal oxide may be 90 to 100 mass% and is more preferably 99 to 100 mass% with respect to the total mass of the core portion.

### - Inorganic oxide particles

For the inorganic oxide particles, metal oxide particles are favorable.

Examples of the inorganic oxide particles include particles of an oxide of one or more metals selected from Ti, Zr, Si, Al, Sn, Sb, Ta, Ce, La, Fe, Zn, W and In and composite oxide particles thereof. The composite oxide particles refer to oxide particles containing two or more metals (atoms of two or more metals).

The inorganic oxide particles may contain one or more selected from the group consisting of SiO₂ (silica dioxide), Al₂O₃ (aluminum oxide), SnO₂ (tin oxide), ZrO₂ (zirconium oxide), and TiO₂ (titanium oxide), preferably contains one or more selected from the group consisting of SiO₂ and ZrO₂, and more preferably contains SiO₂.

For the inorganic oxide particles, commercial products may be used. Examples of commercial inorganic oxide particles include a sol in which inorganic oxide particles of one or more selected from the group consisting of SiO₂, Al₂O₃, SnO₂, ZrO₂, TiO₂, and composite oxide particles thereof are dispersed in water or an organic solvent.

The inorganic oxide particles may be surface-treated.

Exemplary surface treatments include introduction of various functional groups and treatments using known surface treatment agents.

Examples of surface-treated inorganic oxide particles include inorganic oxide particles having a starting moiety on the surfaces thereof, which will be described later.

The average particle size of the inorganic oxide particles may be 0.5 to 70 nm and is more preferably 1 to 50 nm.

Examples of methods of measuring the average particle size include a method in which the particle sizes of given 100 inorganic oxide particles are measured with a scanning electron microscope and the arithmetic mean of the measurement values is calculated, and a method in which the measurement is carried out by dynamic light scattering under the following conditions:
Measurement apparatus: Zeta-potential and particle size analyzer ELS-Z2 (manufactured by Otsuka Electronics Co., Ltd.)
Measurement cell: Particle size cell unit (scattering angle: 165°)
Measurement temperature: 25°C
Method of particle size analysis: CONTIN method

In the measurement, the inorganic oxide particles to be measured or a dispersion liquid containing the inorganic oxide particles to be measured is optionally diluted with a dilution solvent. For the dilution solvent, methyl ethyl ketone (MEK) is used for example, and if the use of MEK causes a problem such as aggregation of the inorganic oxide particles, another suitable dilution solvent is used.

In the present disclosure, the term "average particle size" refers to the average particle size on a volume distribution basis, unless otherwise noted.

### - Silsesquioxane

Silsesquioxane is a silane compound having the basic structure represented by Formula (Q) as obtained through hydrolysis of a trifunctional silane compound such as alkoxysilane, chlorosilane, or silanol.

Examples of the structure of the silsesquioxane include an irregular form called a random structure, a ladder structure, a cage type (completely condensed cage type) structure, and an incomplete cage type structure (which is a partially cleaved structure of a cage type structure; e.g., a structure lacking a part of silicon atoms in a cage type structure, and a structure in which a silicon-oxygen bond is cleaved in a part of a cage type structure).

R^{Q}-SiO_{3/2} ... (Q)

In Formula (Q), R^{Q} represents a monovalent organic group.

Examples of the silsesquioxane include SQ series (e.g., AC-SQ series and MAC-SQ series, manufactured by TOAGOSEI Co., Ltd.).

The average particle size of the silsesquioxane may be 0.5 to 200 nm and is more preferably 1 to 50 nm.

The average particle size thereof can be measured by the same method as that for the inorganic oxide particles.

The core portion content may be 10 to 90 mass% and is more preferably 60 to 90 mass% with respect to the total mass of the core-shell particle. The content of the inorganic oxide particles or the silsesquioxane may be within the above preferable range with respect to the total mass of the core-shell particle.

### (First shell portion)

The core-shell particle has the first shell portion covering the core portion.

The first shell portion includes a polymer chain A and covers the core portion partially or entirely. In other words, at least a part of the surface of the inorganic oxide particle or silsesquioxane forming the core portion is modified with the polymer chain A.

### - Polymer chain A

The first shell portion includes the polymer chain A.

The polymer chain A is a polymer chain including one or more selected from the group consisting of acrylate-based polymer chains and methacrylate-based polymer chains.

The form in which the polymer chain A covers the core portion may be any of a covalent bond, a coordinate bond, an ion bond, a hydrogen bond, a van der Waals bond, and a metallic bond, with a covalent bond being more preferred.

The acrylate-based polymer chain is a polymer chain having a repeating unit derived from a compound X1 having an acryloyl group, and the methacrylate-based polymer chain is a polymer chain having a repeating unit derived from a compound X2 having a methacryloyl group.

The compound X1 and the compound X2 are hereinafter also collectively called "compound X."

The compound X may be a monofunctional or polyfunctional compound X, and a polyfunctional compound X is more preferred.

When a polyfunctional compound X is used, a branched structure and/or a network structure (crosslinked structure) can be introduced to the polymer chain A to be formed, which leads to excellent scratch resistance.

The number of (meta)acryloyl groups that the compound X has may be one or two or more and is more preferably 2 to 5.

The compound X may have other functional groups than the (meta)acryloyl group. Examples of other functional groups include a hydroxy group and ethylenically unsaturated groups such as a vinyl group and a styryl group.

The compound X may be a compound represented by Formula (X).

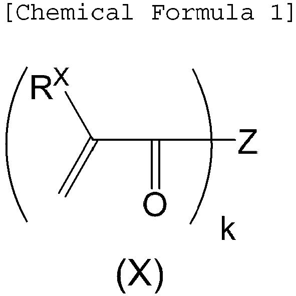

In Formula (X), R^{X} represents a hydrogen atom or a substituent. The substituent may be an organic group and is more preferably a methyl group. A plurality of R^{X}'s may be the same or different.

k represents an integer of 2 or more, may be an integer of 2 to 10, is more preferably 2 or 3, and even more preferably 3.

Z represents a k-valent linking group. When k is 2, Z may be a single bond.

The number of atoms other than a hydrogen atom in the k-valent linking group may be 1 to 500.

Examples of the k-valent linking group include: divalent linking groups such as an ether group (-O-), a carbonyl group (-CO-), an ester group (-COO-), a thioether group (-S-), a urethane group (-NHCOO-), -SO₂-, -NR^{N}- (R^{N} represents a hydrogen atom or a substituent), an alkylene group (having preferably 1 to 10 carbon atoms), an alkenylene group (having preferably 2 to 10 carbon atoms), and an alkynylene group (having preferably 2 to 10 carbon atoms); trivalent linking groups such as a trivalent linking group having a group represented by "-N<" and a trivalent linking group having a group represented by "-CH<"; a tetravalent linking group having a group represented by ">C<"; a k-valent linking group having a cyclic group such as an aromatic ring group or an aliphatic ring group (preferably a k-valent cyclic group); and groups that are combinations thereof.

A cyclic group composing the k-valent linking group having a cyclic group may have a heteroatom.

Examples of the aromatic ring group include a benzene ring group, a naphthalene ring group, and a bisphenol ring group such as a cyclic group formed by removing an arbitrary hydrogen atom from a bisphenol compound, e.g., bisphenol A.

Examples of the aliphatic ring group include: cycloalkane ring groups such as a cyclohexane ring group, a cyclopentane ring group, and a tricyclodecane ring group; a dioxane ring group; and an isocyanuric ring group. Of these, an isocyanuric ring group is more preferred.

The alkylene group, the alkenylene group, the alkynylene group, and the cyclic group may further have a substituent, if possible.

When Z is a divalent linking group, Z may have one or more groups selected from the group consisting of an alkylene group, a (poly)oxyalkylene group, and a urethane group.

In Z, the atom directly bonded to the "R^{X}-C(=CH₂)-CO-" group (i.e., the group parenthesized in Formula (A)), the number of which is k, may be an oxygen atom.

The compound X is not particularly limited as long as it is a compound having a (meta)acryloyl group.

Examples of the compound X include tris(2-acryloxyethyl) isocyanurate, caprolactone modified tris-(2-acryloxyethyl) isocyanurate, 2-hydroxy-3-methacrylpropyl acrylate, trimethylolpropane trimethacrylate, pentaerythritol triacrylate, and tricyclodecanedimethanol diacrylate.

The polymer chain A may have other repeating units than the repeating unit derived from the compound X.

When the polymer chain A contains a repeating unit derived from the polyfunctional compound X (preferably a compound represented by Formula (X)), the content thereof may be 10 to 100 mass% and is more preferably 50 to 100 mass% with respect to the total mass of the polymer chain A.

The first shell portion content may be 5 to 80 mass% and is more preferably 20 to 80 mass% with respect to the total mass of the core-shell particle.

The polymer chain A content may be 30 to 100 mass% and is more preferably 30 to 90 mass% with respect to the total mass of the first shell portion.

The polymer chain A may be a polymer chain obtained by living radical polymerization.

One example of the living radical polymerization is a step 1 to be described later.

Synthesis of the polymer chain A by the living radical polymerization leads to narrow molecular weight distribution, and the core-shell particles can be uniformly dispersed in the film and the composition, resulting in lower haze and more excellent hardness of the film.

### (Second shell portion)

The core-shell particle has the second shell portion covering the first shell portion.

The second shell portion includes a polymer chain B and covers the second shell portion partially or entirely. In other words, at least a part of the surface of the first shell portion opposite from the core portion side is modified with the polymer chain B.

### - Polymer chain B

The second shell portion includes the polymer chain B.

The polymer chain B is a polymer chain B obtained by cationic polymerization of an oxetanyl group of an oxetanyl group-containing compound (hereinafter also referred to as "compound Y").

By use of a cationic polymerization initiator or the like, an oxonium cation derived from the oxetanyl group of the compound Y is generated, and the compounds Y are cationically polymerized with each other owing to the oxonium cation, thereby obtaining the polymer chain B. Thus, the polymer chain B has a polyether structure generated upon ring opening of the oxetanyl group of the compound Y. When first shell particles having a cationically polymerizable group are used as described later, the cationically polymerizable group may be involved in the cationic polymerization.

The form in which the polymer chain B covers the first shell portion may be any of a covalent bond, a coordinate bond, an ion bond, a hydrogen bond, a van der Waals bond, and a metallic bond, with a covalent bond being more preferred.

### -- Compound Y

The compound Y is an oxetanyl group-containing compound, and the polymer chain B can be synthesized by cationic polymerization of the compound Y.

The polymer chain B may have a repeating unit formed by cationic polymerization of the oxetanyl group of the compound Y.

The compound Y may be a monofunctional or polyfunctional compound Y, and a polyfunctional compound Y is more preferred.

When a polyfunctional compound Y is used, a branched structure and/or a network structure (crosslinked structure) can be introduced to the polymer chain B to be formed, which leads to excellent scratch resistance.

The number of oxetanyl groups that the compound Y has may be one or two or more, is more preferably 2 to 5, and even more preferably 2 or 3.

The compound Y may have other functional groups than the oxetanyl group. Examples of other functional groups include a hydroxy group and ethylenically unsaturated groups such as a (meth)acryloyl group, a vinyl group, and a styryl group.

The compound Y may be a compound represented by Formula (Y).

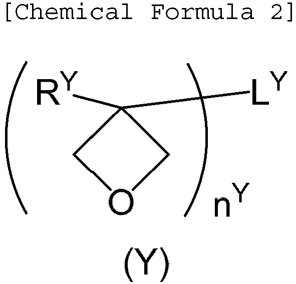

In Formula (Y), R^{Y} represents a hydrogen atom or an alkyl group. L^{Y} represents an n^{Y}-valent linking group. n^{Y} represents an integer of 2 or more. When n^{Y} is 2, L^{Y} may be a single bond. A plurality of R^{Y}'s may be the same or different.

R^{Y} represents a hydrogen atom or an alkyl group.

The alkyl group may be linear, branched or cyclic.

The alkyl group preferably has 1 to 10 carbon atoms, more preferably 1 to 5 carbon atoms, and even more preferably 1 to 3 carbon atoms.

Examples of the alkyl group include a methyl group, an ethyl group, a propyl group, and a butyl group, with an ethyl group being more preferred.

L^{Y} represents an n^{Y}-valent linking group.

The n^{Y}-valent linking group is for example a k-valent linking group and may be -O-, an alkylene group, an aromatic ring group, or a group that is a combination thereof.

One example of the group that is a combination thereof is -alkylene group-O-alkylene group-.

n^{Y} represents an integer of 2 or more. When n^{Y} is 2, L^{Y} may be a single bond.

n^{Y} may be an integer of 2 to 5 and is more preferably 2 or 3.

Examples of the compound Y include xylylene bisoxetane, a compound S to be described later, and 3-ethyl-3{[(3-ethyloxetane-3-yl)methoxy]methyl}oxetane.

L^{S} in the compound S represents a benzene ring or an alkylene group. The benzene ring may have at least one selected from the group consisting of an alkyl group, an amino group, and a hydroxy group. The alkylene group may have at least one selected from the group consisting of an amino group and a hydroxy group. The alkyl group and the alkylene group each preferably have 1 to 3 carbon atoms.

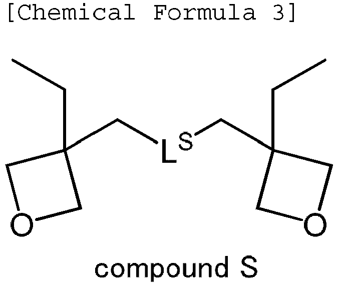

The polymer chain B may have other repeating units than the repeating unit formed by cationic polymerization of the oxetanyl group of the compound Y.

Examples of other repeating units include a repeating unit that the polymer chain A may have.

The content of the repeating unit formed by cationic polymerization of the oxetanyl group of the compound Y (preferably a compound represented by Formula (Y)) may be 50 to 100 mass% and is more preferably 80 to 100 mass% with respect to the total mass of the polymer chain B.

### <Other components>

The film may contain other components than the core-shell particles.

Examples of other components include: other particles than the core-shell particles; various components included in the composition to be described later, reaction products thereof, and decomposition products thereof; and polymer compounds.

Examples of the polymer compounds include: a polymer compound obtained by polymerizing the compound X and/or the compound Y; and a polymer compound containing the polymer chain A and/or the polymer chain B.

### <Method of producing the core-shell particles>

As for a method of producing the core-shell particles, the production is possible by a known method.

Specifically, one example is a method of producing core-shell particles each having a core portion, a first shell portion covering the core portion, and a second shell portion covering the first shell portion, the method comprising, in this order:
a step 1 of forming the first shell portion by reacting the inorganic oxide particles or the like having a starting moiety on the surfaces thereof with the compound X; and
a step 2 of forming the second shell portion covering the first shell portion by cationic polymerization of an oxetanyl group of an oxetanyl group-containing compound (compound Y).

### (Step 1)

The step 1 is, for example, a step of reacting a starting moiety of the inorganic oxide particles or the like with the compound X to synthesize the polymer chain A, thereby covering the core portion with the first shell portion including the polymer chain A.

The step 1 may be a step of subjecting a starting moiety of the inorganic oxide particles or the like and the compound X to living polymerization to synthesize the polymer chain A, thereby covering the core portion with the polymer chain A.

The step 1 may be a step of reacting a mixture for living polymerization to be described later.

The living polymerization may be living radical polymerization, and the living radical polymerization may be atom transfer radical polymerization.

The mixture for living polymerization may contain the inorganic oxide particles or the like having a starting moiety on the surfaces thereof, the compound X, and a living polymerization catalyst.

As one embodiment of the step 1, a step 1 in which the mixture for living polymerization is reacted is described below in detail.

### - Inorganic oxide particles or the like having a starting moiety on the surfaces thereof

The inorganic oxide particles or the like having a starting moiety on the surfaces thereof refers to inorganic oxide particles or the like having, on the surfaces thereof, a group that serves as a starting point of the living radical polymerization.

The definition of the inorganic oxide particles or the like is as described above.

The starting moiety is a halogenated organic group, for instance.

The starting moiety may be, for example, a moiety having a group represented by Formula (S1) and is more preferably a group represented by Formula (S2).

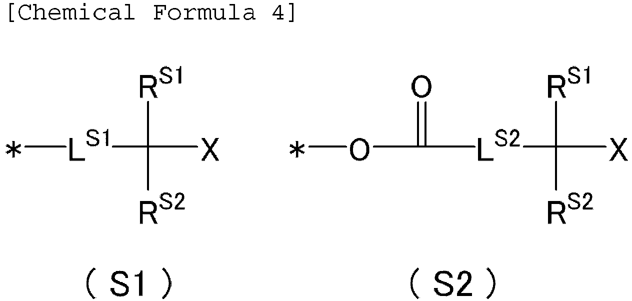

In Formula (S1), * represents a bonding position. X represents a halogen atom.

R^{S1} and R^{S2} each independently represent a hydrogen atom or a substituent.

The substituent may be an organic group and is more preferably a hydrocarbon group. The substituent preferably has 1 to 20 carbon atoms.

L^{S1} represents a divalent linking group.

Examples of the divalent linking group include an ether group, a carbonyl group, an ester group, a thioether group, -SO₂-, -NR^{N}- (R^{N} represents a hydrogen atom or a substituent), an alkylene group (having preferably 1 to 10 carbon atoms), an alkenylene group (having preferably 2 to 10 carbon atoms), an alkynylene group (having preferably 2 to 10 carbon atoms), an aromatic ring group (e.g., a benzene ring group), an aliphatic ring group, and groups that are combinations thereof.

The alkylene group, the alkenylene group, the alkynylene group, the aromatic ring group, and the aliphatic ring group may further have a substituent (e.g., a hydroxy group), if possible.

In Formula (S2), * represents a bonding position. X represents a halogen atom.

R^{S1} and R^{S2} each independently represent a hydrogen atom or a substituent.

The substituent may be an organic group and is more preferably a hydrocarbon group. The substituent preferably has 1 to 20 carbon atoms.

L^{S2} represents an alkylene group that may have a substituent.

The alkylene group may be a linear or branched group and may have 1 to 12 carbon atoms.

One example of the substituent that the alkylene group may have is a hydroxy group.

As a method of producing the inorganic oxide particles or the like having a starting moiety on the surfaces thereof, one exemplary method is as follows: Inorganic oxide particles or the like having an ethylenically unsaturated group (e.g., (meth)acryloyl group)-containing group fixed on the surfaces thereof is reacted with epihalogenhydrin (e.g., epichlorohydrin) in the presence of aluminum trichloride.

In this case, the content of the inorganic oxide particles or the like having an ethylenically unsaturated group-containing group fixed on the surfaces thereof may be 70 to 99.9 mass% and is more preferably 90 to 99 mass% with respect to the total content of the inorganic oxide particles or the like having an ethylenically unsaturated group-containing group fixed on the surfaces thereof, aluminum trichloride, and epihalogenhydrin.

The aluminum trichloride content may be 0.01 to 5 mass% and is more preferably 0.05 to 1 mass% with respect to the above total content.

The epihalogenhydrin content may be 0.05 to 30 mass% and is more preferably 0.5 to 10 mass% with respect to the above total content.

After the reaction for producing the inorganic oxide particles having a starting moiety on the surfaces thereof is carried out using a composition including the inorganic oxide particles or the like having an ethylenically unsaturated group-containing group fixed on the surfaces thereof, aluminum trichloride, and epihalogenhydrin, the composition used in the reaction may be directly used for preparation of the mixture for living polymerization.

The inorganic oxide particles or the like having an ethylenically unsaturated group-containing group fixed on the surfaces thereof may be produced by, for instance, reacting inorganic oxide particles or the like with a silane coupling agent having an ethylenically unsaturated group (e.g., (meth)acryloyl group), or a commercial product may be used.

For the inorganic oxide particles or the like having a starting moiety on the surfaces thereof, one type thereof may be used alone, or two or more types thereof may be used in combination.

The content of the inorganic oxide particles or the like having a starting moiety on the surfaces thereof may be 20 to 99.5 mass% and is more preferably 30 to 96 mass% with respect to the total solids in the mixture for living polymerization.

### - Compound X

Examples of the compound X include the compound X described in relation to the first shell portion and the polymer chain A, and a preferred embodiment thereof is also the same.

The compounds X may be used alone or in combination of two or more.

The compound X content may be 0.1 to 60 mass% and is more preferably 0.2 to 50 mass% with respect to the total solids in the mixture for living polymerization.

The compound X content may be 0.01 to 110 mass% and is more preferably 0.05 to 40 mass% with respect to the total mass of the inorganic oxide particles or the like having a starting moiety on the surfaces thereof.

### - Living polymerization catalyst

Examples of the living polymerization catalyst include transition metals and transition metal compounds.

Examples of the transition metals as well as transition metals of the transition metal compounds include copper, iron, cobalt, chromium, manganese, molybdenum, silver, zinc, palladium, rhodium, platinum, ruthenium, iridium, ytterbium, samarium, rhenium, and nickel, and employed may be copper, iron, or ruthenium.

The transition metal compound may be a transition metal complex composed of a transition metal as above and a ligand.

The living polymerization catalyst may be an iron compound (e.g., ferrocene).

The iron compound may be a compound represented by Formula (F1) or a compound represented by Formula (F2).

CP¹-Fe-CP² ... (F1)

CP¹-Fe-(R^{Q})₃ ... (F2)

In Formula (F1), CP¹ and CP² each independently represent a cyclopentadienyl ring that may have a substituent.

The number of the substituents of the cyclopentadienyl ring may be 0 to 5 and is more preferably 1.

The substituent that the cyclopentadienyl ring may have may be -P(R^{P})₂.

In "-P(R^{P})₂," P is a phosphorus atom, and two R^{P}'s each independently represent a hydrogen atom or a substituent. The substituent may be an organic group and is more preferably an alkyl group or a phenyl group. The alkyl group may be a linear or branched group and may have 1 to 3 carbon atoms.

In Formula (F2), CP¹ represents a cyclopentadienyl ring that may have a substituent. The definition of CP¹ in Formula (F2) is the same as that in Formula (F1).

In Formula (F2), three R^{Q}'s each independently represent -CO, a halogen atom, or -PPh₃.

In "-PPh₃," P is a phosphorus atom, and Ph is a phenyl group that may have a substituent. The substituent that the phenyl group may have may be an alkyl group. The alkyl group may be a linear or branched group and may have 1 to 3 carbon atoms.

The number of the substituents of the phenyl group may be 0 to 5.

The living polymerization catalyst may be copper or a copper compound.

Examples of the copper compound include copper(I) chloride, copper(I) bromide, copper(I) iodide, copper(I) cyanide, copper(I) oxide, and copper(I) perchlorate.

The living polymerization catalysts may be used alone or in combination of two or more.

The living polymerization catalyst content may be 0.0001 to 1 mass% and is more preferably 0.005 to 0.1 mass% with respect to the total solids in the mixture for living polymerization.

### - Solvent

The mixture for living polymerization may further contain a solvent.

Examples of the solvent include ethyl acetate, toluene, acetone, dimethylformamide, ketones, alcohols, and water.

The solvents may be used alone or in combination of two or more.

When the mixture for living polymerization contains the inorganic oxide particles or the like having a starting moiety on the surfaces thereof and contains the solvent, the solvent content may be 20 to 90 mass% and is more preferably 20 to 80 mass% with respect to the total mass of the mixture for living polymerization.

### - Promoter

The mixture for living polymerization may further contain a promoter.

Examples of the promoter include a triazine compound, a benzotriazole compound, and an imidazole compound.

The triazine compound is a compound having at least one triazine ring.

The benzotriazole compound is a compound having at least one benzotriazole ring.

The imidazole compound is a compound having at least one imidazole ring.

The promoter may be a compound represented by Formula (P1), a compound represented by Formula (P2), or a compound represented by Formula (P3), and is more preferably a compound represented by Formula (P3).

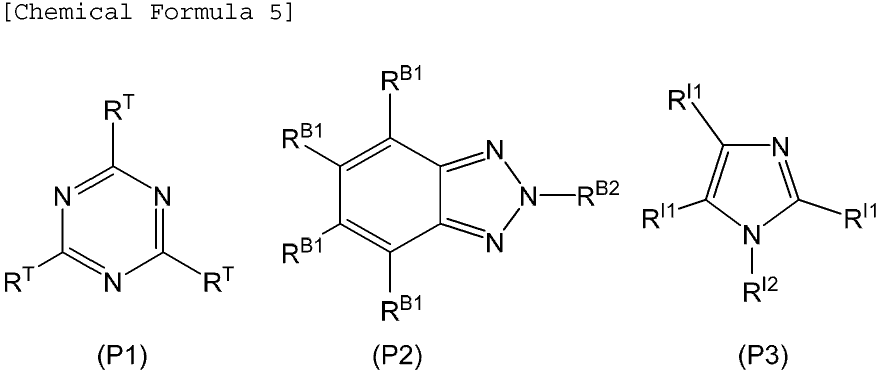

In Formula (P1), three R^{T}'s each independently represent a hydrogen atom or a substituent and may each independently be a hydrogen atom, an alkyl group that may have a substituent, or a phenyl group that may have a substituent.

The alkyl group may be a linear or branched group and may have 1 to 15 carbon atoms. The alkyl group may be a methyl group or an ethyl group and is more preferably a methyl group.

The number of the substituents of the phenyl group may be 0 to 5, for example.

The substituent that the phenyl group may have may be an alkyl group (preferably having 1 to 15 carbon atoms), a hydroxy group, a carboxy group, or a group that is a combination thereof. One or more of methylene groups (-CH₂-) constituting the alkyl group that the phenyl group may have may be substituted with an ester group.

One example of the group that is a combination thereof is an alkoxy group that may have a hydroxy group as a substituent.

In Formula (P2), four R^{B1}'s each independently represent a hydrogen atom or a substituent.

In Formula (P2), R^{B2} represents a hydrogen atom or a substituent and may be a hydrogen atom, an alkyl group that may have a substituent, or a phenyl group that may have a substituent.

The definition of R^{B2} in Formula (P2) is the same as that of R^{T} in Formula (P1).

In Formula (P3), three R^{I1}'s each independently represent a hydrogen atom or a substituent and may each independently be a hydrogen atom, an alkyl group that may have a substituent, a phenyl group that may have a substituent, a hydroxy group, or a carboxy group.

The definition of the alkyl group is the same as that of the alkyl group that may be represented by R^{T} in Formula (P1).

The definition of the phenyl group is the same as that of the phenyl group that may be represented by R^{T} in Formula (P1).

In Formula (P3), R^{I2} represents a hydrogen atom or a substituent and may be a hydrogen atom, an alkyl group that may have a substituent, or a phenyl group that may have a substituent.

The definition of R^{I2} in Formula (P3) is the same as that of R^{T} in Formula (P1).

Exemplary compounds represented by Formular (P3) include 1-methylimidazole.

Examples of commercial promoters include Tinuvin 400, Tinuvin 384-2, and Tinuvin 477 (all manufactured by BASF).

The promoters may be used alone or in combination of two or more.

When the mixture for living polymerization contains the promoter, the content thereof may be 0.0001 to 10 mass% and is more preferably 0.0001 to 5 mass% with respect to the total solids in the mixture for living polymerization.

When the mixture for living polymerization contains the living polymerization catalyst, the content thereof may be 50 to 99.99 mass% and is more preferably 80 to 99.99 mass% with respect to the total content of the promoter and the living polymerization catalyst.

The reaction time of the living polymerization is for example 1 to 10 hours.

The reaction temperature of the living polymerization is for example 25°C to 60°C.

### (Step 2)

The step 2 is a step of forming the second shell portion covering the first shell portion by cationic polymerization of the oxetanyl group of the compound Y to synthesize the polymer chain B.

The step 2 may be a step of reacting a mixture for cationic polymerization to be described later.

The cationic polymerization may be living cationic polymerization.

The mixture for cationic polymerization may be prepared by, after the reaction of the mixture for living polymerization in the step 1, adding various components to be described later to the resulting mixture. In other words, the mixture for cationic polymerization may contain various components contained in the mixture for living polymerization, reaction products thereof, and mixtures thereof.

The mixture for cationic polymerization may contain first shell particles having a cationically polymerizable group, and a cationic polymerization initiator, which will be described later.

As one embodiment of the step 2, a step 2 in which the mixture for cationic polymerization is reacted is described below in detail.

### - First shell particles having a cationically polymerizable group

The first shell particles having a cationically polymerizable group are particles having been obtained in the step 1 that further have a cationically polymerizable group; in other words, the first shell particles each having the core portion and the first shell portion covering the core portion further have a cationically polymerizable group.

Examples of the cationically polymerizable group include alicyclic ether groups such as an epoxy group and an oxetanyl group, a cyclic acetal group, a cyclic lactone group, a cyclic thioether group, a spiro orthoester group, and a vinyloxy group, with an epoxy group or an oxetanyl group being more preferred.

One exemplary method of producing the first shell particles having a cationically polymerizable group is a method in which the first shell particles are reacted with a compound having a cationically polymerizable group.

The step 2 may include a step of reacting the compound having a cationically polymerizable group. The compound having a cationically polymerizable group may further have an ethylenically unsaturated group that is different from the cationically polymerizable group. The ethylenically unsaturated group may be a (meth)acryloyl group.

Examples of the compound having a cationically polymerizable group include a compound T.

n in the compound T represents an integer of 1 to 10. n may be 1 to 2.

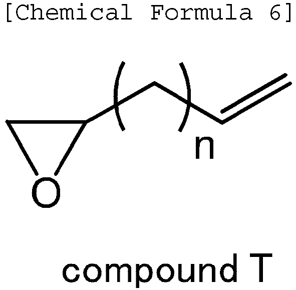

The first shell particle content may be 1 to 90 mass% and is more preferably 5 to 80 mass% with respect to the total content of the first shell particles and the compound having a cationically polymerizable group.

The content of the compound having a cationically polymerizable group may be 5 to 80 mass% and is more preferably 5 to 50 mass% with respect to the above total content.

### - Cationic polymerization initiator

The cationic polymerization initiator may be a known cationic polymerization initiator, for instance.

Specifically, this may be a cationic polymerization initiator among polymerization initiators that may be included in the composition to be described later.

The cationic polymerization initiators may be used alone or in combination of two or more.

The cationic polymerization initiator content may be 0.05 to 5.0 mass% and is more preferably 0.1 to 3.0 mass% with respect to the total solids in the mixture for cationic polymerization.

Reaction conditions for the cationic polymerization such as the reaction time and the reaction temperature may be suitably adjusted.

The film described above may be used as a hard coat layer to be described later and is more preferably used as a hard coat layer disposed on a spectacle lens base.

Embodiments of various components contained in the mixture for living polymerization or the mixture for cationic polymerization are preferably as follows.

The mass ratio of the compound Y content to the compound X content (compound Y content/compound X content) may be 0.01 to 2.00.

### [Composition]

The composition includes the core-shell particles described above, and the film described above can be formed by use of the composition.

The composition may further include a polymerizable compound and/or a polymerization initiator and more preferably includes a polymerizable compound and a polymerization initiator.

Various components that may be included in the composition are described below in detail.

### <Core-shell particles>

The composition includes the core-shell particles described above.

The core-shell particles are as described in relation to the film.

For the core-shell particles, one type thereof may be used alone, or two or more types thereof may be used in combination.

The core-shell particle content may be 25 to 90 mass% and is more preferably 30 to 85 mass% with respect to the total solids in the composition.

### <Polymerizable compound>

The composition may include a polymerizable compound.

Examples of the polymerizable compound include a compound having a polymerizable group, and a radically polymerizable group and a cationically polymerizable group are more preferred. Examples of the radically polymerizable group include a (meth)acryloyl group. Examples of the cationically polymerizable group include alicyclic ether groups such as an epoxy group and an oxetanyl group, a cyclic acetal group, a cyclic lactone group, a cyclic thioether group, a spiro orthoester group, and a vinyloxy group, with an epoxy group or an oxetanyl group being more preferred.

The polymerizable compound may be the compound X, the compound Y, or the compound having a cationically polymerizable group in the step 2.

When a mixture having been reacted for obtaining the polymer chain A is used in preparation of the composition of the present disclosure, a part or all of the compound X included in the composition of the present disclosure may be an unreacted part of the compound X contained in the mixture.

When a mixture having been reacted for obtaining the polymer chain B is used in preparation of the composition of the present disclosure, a part or all of the compound Y included in the composition of the present disclosure may be an unreacted part of the compound Y contained in the mixture.

In the step 2, when a mixture having been reacted for obtaining the first shell particles is used in preparation of the composition of the present disclosure, a part or all of the compound having a cationically polymerizable group included in the composition of the present disclosure may be an unreacted part of the compound having a cationically polymerizable group contained in the mixture.

The polymerizable compounds may be used alone or in combination of two or more.

When the composition includes the polymerizable compound, the polymerizable compound content may be 0.01 to 50 mass% and is more preferably 1 to 40 mass% with respect to the total solids in the composition.

### <Polymerization initiator>

The composition may include a polymerization initiator.

Examples of the polymerization initiator include a photopolymerization initiator and a thermal polymerization initiator, and the polymerization initiator may be a radical polymerization initiator or a photopolymerization initiator.

Exemplary polymerization initiators include: Omnirad 127, 184, 907, 651, 1700, 1800, 819, 369, and TPO (manufactured by IGM Resins B.V.); Darocur 1173 (manufactured by Sigma-Aldrich); ESACURE KIP150 and TZT (manufactured by Siber Hegner Japan); Kayacure BMS and Kayacure DMBI (manufactured by Nippon Kayaku Co., Ltd.); and Tinuvin 400, Tinuvin 405, Tinuvin 460, Tinuvin 477, Tinuvin 479, and Tinuvin 1577 (manufactured by BASF).

Exemplary cationic polymerization initiators include: an onium salt composed of one or more cations selected from the group consisting of aromatic sulfonium, aromatic iodonium, aromatic diazonium, and pyridinium, and one or more anions selected from the group consisting of BF₄⁻, PF⁶⁻, SbF⁶⁻, AsF⁶⁻, CF₃SO³⁻, (CF₃SO₂)₂N⁻, and B (C₆F₅)⁴⁻; and a thermal cationic polymerization initiator such as aluminum complex of aluminum chloride or the like.

The polymerization initiators may be used alone or in combination of two or more.

When the composition includes the polymerization initiator, the content thereof may be 0.001 to 5 mass% and is more preferably 0.01 to 5 mass% with respect to the total solids in the composition.

### <Sensitizer>

The composition may include a sensitizer.

When the composition includes the polymerization initiator, it is preferable for the composition to further include a sensitizer.

Examples of the sensitizer include ANTHRACURE series (manufactured by Kawasaki Kasei Chemicals Ltd.).

The sensitizers may be used alone or in combination of two or more.

When the composition includes the sensitizer, the content thereof may be 0.001 to 5 mass% and is more preferably 0.05 to 2 mass% with respect to the total solids in the composition.

### <Surfactant>

The composition may include a surfactant.

The surfactant may be, for instance, a silicone compound such as silicone oil.

Examples of the surfactant include DOWSIL series (manufactured by Dow).

The surfactants may be used alone or in combination of two or more.

When the composition includes the surfactant, the content thereof may be 0.001 to 5 mass% and is more preferably 0.01 to 0.5 mass% with respect to the total solids in the composition.

### <UV absorbers

The composition may include a UV absorber.

Examples of the UV absorber include a triazine compound and a benzotriazole compound.

Examples of the triazine compound and the benzotriazole compound include a triazine compound (e.g., the compound represented by Formula (P1)) and a benzotriazole compound (e.g., the compound represented by Formula (P2)) that may be contained in the mixture for living polymerization described above.

Thus, when the mixture for living polymerization is used in preparation of the composition, the triazine compound and the benzotriazole compound contained in the mixture for living polymerization may be used as the UV absorber in the composition.

The UV absorbers may be used alone or in combination of two or more.

When the composition includes the UV absorber, the content thereof may be 0.01 to 5 mass% and is more preferably 0.1 to 3 mass% with respect to the total solids in the composition.

### <Solvent>

The composition may include a solvent.

The solvent may be water or an organic solvent, for instance.

Examples of the organic solvent include an alcoholic solvent, a ketone solvent, an ether solvent, an ester solvent, a hydrocarbon solvent, a halogenated hydrocarbon solvent, an amide solvent, a sulfone solvent, and a sulfoxide solvent.

The solvents may be used alone or in combination of two or more.

When the composition includes the solvent, the content thereof may be 10 to 90 mass% and is more preferably 20 to 60 mass% with respect to the total mass of the composition.

### <Other Components>

The mixture for living polymerization and the mixture for cationic polymerization may be used for preparation of the composition.

The composition may include various components that may be contained in the mixture for living polymerization and the mixture for cationic polymerization, reaction products thereof, and decomposition products thereof.

The composition may optionally include various additives such as an antiaging agent, a coating adjusting agent, a light stabilizer, an antioxidant, a discoloration preventing agent, a dye, a filler, and an internal mold release agent, in addition to the above-described various components.

### <Method of manufacturing the composition>

The method of manufacturing the composition may involve mixing various components that may be included in the composition as described above at one time or in separate steps.

The composition is favorably utilized as a composition (hard coat layer-forming composition) used to form a hard coat layer (the film described above) on a base. The base may be a plastic base.

Examples of the plastic base include a plastic spectacle lens base and a plastic film.

In the latter part, an embodiment in which the hard coat layer-forming composition is applied on a plastic spectacle lens base is described in detail as an example.

### [Spectacle lens]

The film may be used in a spectacle lens.

One example of the spectacle lens manufactured is a spectacle lens including a spectacle lens base (e.g., a plastic spectacle lens base) and the above-described film (hard coat layer) disposed on the spectacle lens base.

FIG. 2 is a cross-sectional view of a spectacle lens of one embodiment.

A spectacle lens 10 shown in FIG. 2 includes a plastic spectacle lens base 12 and films 14 separately disposed on the opposite sides of the plastic spectacle lens base 12. The films (hard coat layers) 14 are layers formed from the composition described above.

While each film 14 is disposed in direct contact with the plastic spectacle lens base 12 in FIG. 2, the invention is not limited thereto, and another layer (e.g., a primer layer) may be disposed between the plastic spectacle lens base 12 and the film 14. That is, the film 14 may be disposed directly on or indirectly, via another layer, above the plastic spectacle lens base 12.

In addition, while the films 14 are separately disposed on the opposite sides of the plastic spectacle lens base 12 in FIG. 2, the film 14 may be disposed only on one side of the plastic spectacle lens base 12.

Members that may be included in the spectacle lens 10 are described below in detail.

### <Plastic spectacle lens base>

One exemplary type of the plastic spectacle lens base is a finished lens that is obtained through optical finishing and shaping according to a desired power for both the convex and concave surfaces.

Exemplary plastics (that is, resins) constituting the plastic spectacle lens base include (meth)acrylic resin, thiourethane resin, allyl resin, episulfide resin, polycarbonate resin, polyurethane resin, polyester resin, polystyrene resin, polyethersulfone resin, poly-4-methylpentene-1 resin, diethylene glycol bis(allyl carbonate) resin (CR-39), and polyvinyl chloride resin.

The thickness of the plastic spectacle lens base is often 1 to 30 mm for the sake of handleability.

The refractive index of the plastic spectacle lens base is not particularly limited.

The plastic spectacle lens base may be non-transparent or colored as long as it is translucent.

### <Film>

The film may serve as a hard coat layer.

The hard coat layer is a layer disposed on or above the plastic spectacle lens base and imparting scratch resistance to the plastic spectacle lens base.

The hard coat layer is the film described above and is a layer formed of the composition.

One exemplary method of forming the hard coat layer is a method involving applying the composition described above onto the plastic spectacle lens base to form a coating and subjecting the coating to curing treatment such as light irradiation treatment.

The formation of the coating may optionally be followed by drying treatment such as heating treatment to remove the solvent from the coating.

For the method of applying the composition onto the plastic spectacle lens base, known methods (e.g., dip coating, spin coating, spray coating, ink jet coating, and flow coating) are usable.

When dip coating is employed for instance, the plastic spectacle lens base is immersed in the composition and then pulled out and dried, whereby a coating with a predetermined thickness can be formed on the plastic spectacle lens base.

The thickness of the coating formed on the plastic spectacle lens base can be suitably adjusted.

For the conditions for light irradiation treatment, suitable conditions can be selected according to the type of the polymerization initiator for use.

Exemplary types of light for light irradiation include a UV ray and a visible ray. A light source may be, for example, a high-pressure mercury vapor lamp.

The cumulative light quantity during light irradiation may be 100 to 3,000 mJ/cm² and is more preferably 100 to 1,500 mJ/cm² for the sake of productivity and curing properties of the coating.

The thickness of the hard coat layer may be not less than 1 µm and is more preferably not less than 5 µm and even more preferably not less than 10 µm. The upper limit thereof may be not more than 30 µm.

This thickness is the average thickness, which is determined by measuring the thickness of the hard coat layer at given five points and calculating the arithmetic mean of the measurements.

### <Primer layer>

The spectacle lens may further include a primer layer disposed between the base and the hard coat layer.

The primer layer serves to improve the adhesion of the hard coat layer to the base.

A material constituting the primer layer is resin, for example.

Specific examples of the resin include urethane resin, epoxy resin, phenol resin, polyimide resin, polyester resin, bismaleimide resin, and polyolefin resin.

For a method of forming the primer layer, known methods may be used, for example.

Specifically, there may be used a method involving applying a primer layer-forming composition including a predetermined resin onto the base, optionally followed by curing treatment, thereby forming the primer layer.

The primer layer may have a thickness of 0.3 to 2 µm.

A plastic spectacle lens may further include an antireflection film disposed on the hard coat layer.

The antireflection film constitutes a layer having a function of preventing the reflection of incident light. Specifically, the antireflection film may have low reflection characteristics (wide-band low reflection characteristics) over the entire visible range from 400 to 700 nm.

### <Antireflection film>

The spectacle lens may include an antireflection film.

The antireflection film may have a single layer structure or a multilayer structure.

For the antireflection film, an inorganic antireflection film is preferred. The inorganic antireflection film refers to an antireflection film constituted of an inorganic compound.

An antireflection film with multilayer structure may have the structure in which a low refractive index layer(s) and a high refractive index layer(s) are alternately stacked.

Exemplary materials constituting the high refractive index layer include oxides of titanium, zircon, aluminum, niobium, tantalum, and lanthanum. Exemplary materials constituting the low refractive index layer include silica oxide.

Exemplary methods of forming the antireflection film include dry methods such as vacuum evaporation, sputtering, ion plating, ion-beam assisted deposition, and CVD.

### [EXAMPLES]

The film of the present disclosure is described below in further detail by way of examples and comparative examples; however, the invention should not be construed as being limited to the following examples.

### <Example 1>

### (Formation of primer layer)

### - Preparation of primer layer-forming composition

To pure water (289 parts by mass), Silwet L-77 (manufactured by Momentive Performance Materials Inc.) (0.2 parts by mass) and Dowsil L-7604 (manufactured by Dow) (0.2 parts by mass) as surfactants, propylene glycol monomethyl ether (10.6 parts by mass), an aqueous urethane dispersion (EVAFANOL HA-170, manufactured by Nicca Chemical Co., Ltd.; solid content: 37 mass%) (200 parts by mass) were added and stirred, thereby preparing a primer layer-forming composition 1 having a solid content of 14.8 mass%.

### - Formation of primer layer

A lens (Nikon Lite 3AS material S-2.00D, manufactured by Nikon-Essilor Co., Ltd.) with a refractive index of 1.60 or a lens (S-7.00, manufactured by Nikon-Essilor Co., Ltd.) with a refractive index of 1.74 was used as a plastic spectacle lens base.

Specifically, the lens with a refractive index of 1.60 above was used as the plastic spectacle lens base in production of a hard coat layer-bearing plastic spectacle lens base used in haze evaluation to be described later, and the lens with a refractive index of 1.74 above was used as the plastic spectacle lens base in production of a hard coat layer-bearing plastic spectacle lens base used in pencil hardness evaluation to be described later.

The plastic spectacle lens base was dipped in the primer layer-forming composition 1 at 90 mm/min and baked at 90°C for 20 minutes, thus forming a primer layer.

### (Formation of film)

### - Preparation of the composition

### -- Addition of chloro to SiO₂ particles

Acrylic group-coated SiO₂ nanoparticle dispersion liquid (MEK-AC-4130Y) (manufactured by Nissan Chemical Corporation) (232.00 parts by mass; solid content: 69.60 parts by mass), AlCl₃ (manufactured by Tokyo Chemical Industry Co., Ltd.) (0.12 parts by mass), and epichlorohydrin (manufactured by Tokyo Chemical Industry Co., Ltd.) (1.24 parts by mass) were mixed in this order and stirred at 40°C for 4 hours. The resulting solution was defined as an SiO₂ solution A1. Upon the reaction above, SiO₂ nanoparticles having a Cl group (more specifically, SiO₂ nanoparticles having a group represented by Formula (S1) where X is Cl) were obtained.

The solid content (nanoparticle content) of MEK-AC-4130Y was 30 mass%.

### -- Living radical polymerization

The obtained SiO₂ solution A1 (total parts by mass), an 80 mass% A9300 solution (13.88 parts by mass; solid content: 11.10 parts by mass), a 1 mass% Fe solution (3.1 parts by mass; solid content: 0.31 x 10⁻¹ parts by mass), and a 0.02 mass% MeIm solution (3.1 parts by mass; an effective component: 0.62 x 10⁻³ parts by mass) were mixed and stirred at 40°C for 2 hours. The resulting solution was defined as an LRP-SiO₂ solution A1.

### --- Preparation of 80 mass% A9300 solution

NK Ester A-9300 (manufactured by Shin-Nakamura Chemical Co., Ltd.) (80 parts by mass) and MEK (methyl ethyl ketone) (20 parts by mass) were mixed and stirred well. The resulting solution was defined as the 80 mass% A9300 solution.

### --- Preparation of 1 mass% Fe solution

MEK (99.0 parts by mass) and 1,1-bis(di-isopropylphosphino)ferrocene (manufactured by Tokyo Chemical Industry Co., Ltd.) (1.0 parts by mass) were mixed and stirred well. The resulting solution was defined as the 1 mass% Fe solution.

### --- Preparation of 0.02 mass% MeIm solution

MEK (98 parts by mass) and 1-methylimidazole (manufactured by Tokyo Chemical Industry Co., Ltd.) (2 parts by mass) were mixed and stirred well. The resulting mixture was subjected to 10 times dilution twice. The resulting solution was defined as the 0.02 mass% MeIm solution.

### -- Addition reaction of epoxy group

To the obtained LRP-SiO₂ solution A1 (total parts by mass), 1,2-epoxy-5-hexene (0.80 parts by mass) was added, and the resulting mixture was stirred at 30°C for 2 hours.

### -- Addition reaction of oxetanyl group

To the solution having undergone the addition reaction of an epoxy group, ARON OXETANE OXT-221 (manufactured by Toagosei Co., Ltd.) (15.19 parts by mass) was added, and the resulting mixture was stirred at 40°C for 1 hour. The resulting solution was defined as an Ox-SiO₂ solution A1.

### -- Solvent displacement

MEK (151.1 parts by mass) being a solvent was removed from the obtained Ox-SiO₂ solution A1 (total parts by mass) by use of an evaporator (NE-1101, manufactured by Tokyo Rikakikai Co., Ltd.).

Subsequently, residue was put in a vessel, and also residue remaining in a flask was transferred to the vessel by rinsing the flask with propylene glycol monomethyl ether acetate (PGMEA) three times. In this process, 24.1 parts by mass of PGMEA was used in total. A solution in this vessel was stirred well.

### -- Addition of other components

To the solution having undergone the solvent displacement, Ominirad 819 (manufactured by IGM Resins B.V.) (0.70 parts by mass), Ominirad 127 (manufactured by IGM Resins B.V.) (0.06 parts by mass), Tinuvin 400 (manufactured by BASF) (1.00 parts by mass), SP-172 (manufactured by ADEKA Corporation) (0.58 parts by mass), and a 10 mass% L7604 solution (0.58 parts by mass) (manufactured by Dow) were added to prepare a composition A1.

### --- Preparation of 10 mass% L7604 solution

DOWSIL L-7604 (manufactured by Dow) was diluted 10 times on a mass basis by use of PGMEA. The resulting solution was defined as the 10 mass% L7604 solution.

### - Formation of film

Onto the primer layer of the primer layer-bearing plastic spectacle lens base obtained above, the composition A1 (2.0 mL) was dropped and spin-coated. In the spin coating, the plastic spectacle lens base having the composition A1 applied thereon was rotated at 400 rpm for 10 seconds and then at 2,000 rpm for 0.5 seconds, and finally the rotation was brought to 0 rpm over 1 second. Next, the resulting plastic spectacle lens base was heated at 100°C for 20 minutes, whereafter the coating formed from the composition A1 was irradiated with UV light (cumulative light quantity: 0.8 J/cm²) using a high-pressure mercury vapor lamp (100 mW/cm²) as a light source.

The same treatment as above was performed also on the other surface of the plastic spectacle lens base. UV irradiation of both surfaces was followed by baking at 100°C for 10 minutes, thereby forming a film A1. Thus, a film-bearing plastic spectacle lens base was obtained.

### <Example 2>

At the addition of chloro to SiO₂ particles in Example 1, a UV polymerizable group-coated SiO₂ nanoparticle dispersion liquid (MEK-AC-4130Y) (manufactured by Nissan Chemical Corporation) (232.00 parts by mass; solid content: 69.60 parts by mass), an 80 mass% (meth)acrylic group-containing silsesquioxane solution (AC-SQ TA-100) (manufactured by Toagosei Co., Ltd.) (16.70 parts by mass; solid content: 13.36 parts by mass), AlCl₃ (manufactured by Tokyo Chemical Industry Co., Ltd.) (0.10 parts by mass), and epichlorohydrin (manufactured by Tokyo Chemical Industry Co., Ltd.) (0.98 parts by mass) were mixed in this order and stirred at 40°C for 4 hours. The resulting solution was defined as an SiO₂-TA100 solution A1. Except for the above, a film of Example 2 was formed in the same manner as that for Example 1.

The UV polymerizable group was an ethylenically unsaturated group (acrylic group). The solid content (nanoparticle content) of MEK-AC-4130Y was 30 mass%.

### - Preparation of 80 mass% (meth)acrylic group-containing silsesquioxane solution

AC-SQ TA-100 (Toagosei Co., Ltd.) (80 parts by mass) and MEK (20 parts by mass) were mixed and stirred well. The resulting solution was defined as the 80 mass% (meth)acrylic group-containing silsesquioxane solution.

In Examples 3 to 6 and Comparative Example 1, respective compositions were prepared with reference to Example 1 described above by use of various components as shown in the table below, thus forming films. In Examples 7 to 13 and Comparative Example 2, respective compositions were prepared with reference to Example 2 described above by use of various components as shown in the table below, thus forming films.

In Comparative Examples 1 and 2, no heating treatment was carried out either at the addition reaction of an epoxy group or at the addition reaction of an oxetanyl group. In other words, in Comparative Examples 1 and 2, while each composition contains 1,2-epoxy-5-hexene and ARON OXETANE OXT-221, no heating treatment was carried out either at the addition reaction of an epoxy group or at the addition reaction of an oxetanyl group; consequently, the second shell portion was not formed, so that the films of Comparative Examples 1 and 2 did not contain the predetermined core-shell particles.

The meaning of the descriptions in the table are as follows.

The "(A)/(B)" column shows the mass ratio of the content of the compound X (A9300) to the content of the compound Y (ARON OXETANE OXT-221).

The "(A)/(C1+C2)" column shows the mass ratio of the content of the compound X (A9300) to the total content of the inorganic oxide particles (MEK-AC-4130Y) and the silsesquioxane (AC-SQ TA-100).

The "(D1):(D2)" column shows the mass ratio of Ominirad 819:Ominirad 127.

The "(F):(E)" column shows the mass ratio of AlCl₃:epichlorohydrin.

The "(G)/(E)" column shows the mass ratio of the Fe content to the epichlorohydrin content.

The "(B):(H):(I)" column shows the mass ratio of the compound Y (ARON OXETANE OXT-221) :the compound having a cationically polymerizable group (1,2-epoxy-5-hexene):SP-172.

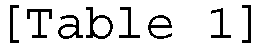

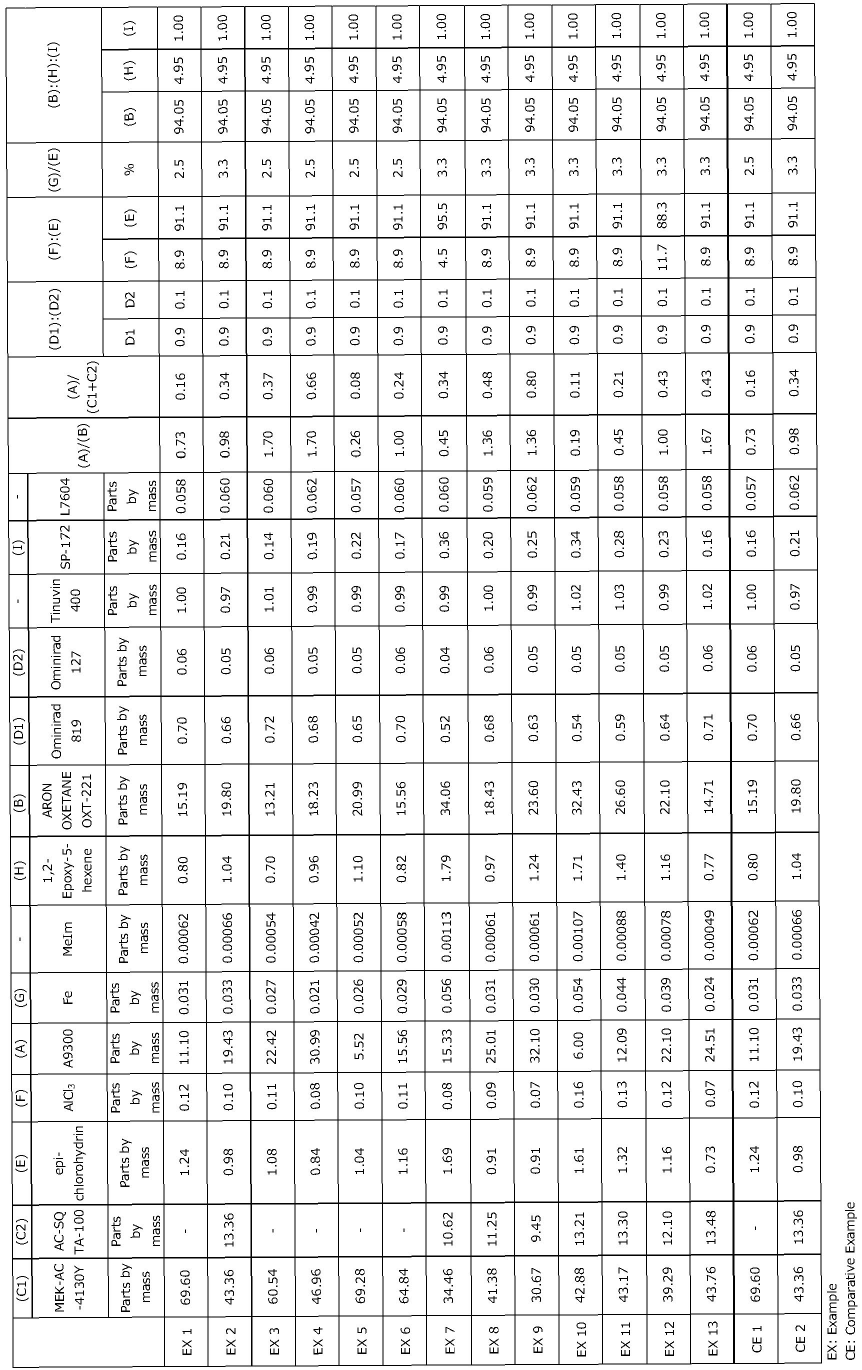

Each numeral value in the table refers to parts by mass of a solid content of the relevant component.
- MEK-AC-4130Y: The 30 mass% acrylic group-coated SiO₂ nanoparticle dispersion liquid described above. It should be noted that the relevant values in the table refer to not parts by mass of the dispersion liquid but a solid content (parts by mass) of "MEK-AC-4130Y."
- AC-SQ TA-100: The 80 mass% (meth)acrylic group-containing silsesquioxane solution described above. It should be noted that the relevant values in the table refer to not parts by mass of the solution but a solid content (parts by mass) of the "80 mass% (meth)acrylic group-containing silsesquioxane solution."
- Epichlorohydrin: The epichlorohydrin described above.
- AlCl₃: The AlCl₃ described above.
- A9300: The 80 mass% A9300 solution described above. It should be noted that the relevant values in the table refer to not parts by mass of the solution but a solid content (parts by mass) of the "80 mass% A9300 solution."
- Fe: The 1 mass% Fe solution described above. It should be noted that the relevant values in the table refer to not parts by mass of the solution but a solid content (parts by mass) of the "1 mass% Fe solution."
- MeIm: The 0.02 mass% MeIm solution described above. It should be noted that the relevant values in the table refer to not parts by mass of the solution but a solid content (parts by mass) of the "0.02 mass% MeIm solution."
- 1,2-Epoxy-5-hexene: The 1,2-epoxy-5-hexene described above.
- ARON OXETANE OXT-221: The ARON OXETANE OXT-221 described above.
- Ominirad 819: The Ominirad 819 described above.
- Ominirad 127: The Ominirad 127 described above.
- Tinuvin 400: The Tinuvin 400 described above.
- SP-172: The SP-172 described above.
- L7604: The 10 mass% L7604 solution described above. It should be noted that the relevant values in the table refer to not parts by mass of the solution but a solid content (parts by mass) of the "10 mass% L7604 solution."

### <Evaluation>

With the film-bearing plastic spectacle lens bases obtained in Examples and Comparative Examples above, the following evaluations were conducted.

### (Haze)

Each film-bearing plastic spectacle lens base was placed on a light receiver side of a haze meter (NDH 7000II, Nippon Denshoku Industries Co., Ltd.), the measurement was performed three times, and the average of the measurement values was calculated and taken as the haze value.
A: A haze value of less than 1.0
B: A haze value of 1.0 or more

### (Scratch resistance (pencil hardness))

With each film-bearing plastic spectacle lens base, the hardness of a film was measured using pencils. As the pencil hardness was successively increased, a pencil was obliquely pressed into a film, and the hardness immediately before the hardness with which a scratch was made was taken as the hardness of the film. For instance, when no scratch was made with 6H but a scratch was made with 7H, the hardness of the hard coat layer was determined to be 6H.
A: Hardness of 6H or higher
B: Hardness of lower than 5H

### (Adhesion)

The adhesion of each film to the primer layer was evaluated by the cross cut tape test according to JIS K 5600.

To be more specific, with a knife, the film surface of each film-bearing plastic spectacle lens base was cut to reach the plastic spectacle lens base at 1-mm intervals, thus forming 100 squares. Next, Scotch tape (manufactured by 3M) was strongly pressed against the thus-cut hard coat layer. Subsequently, the Scotch tape was quickly pulled in a 45° direction relative to the film surface under a load of 4 kg and thereby peeled off, whereafter the number of squares remaining on the plastic spectacle lens base was counted.
AA: The number of remaining squares being 85 or more
A: The number of remaining squares being 70 or more but less than 85
B: The number of remaining squares being less than 70

**[Table 2]**

| | Core-shell particles | | | Evaluation results | | |
|---|---|---|---|---|---|---|
| | Core portion | First shell portion | Second shell portion | Haze | Adhesion | Scratch resistance |
| EX 1 | SiO₂ | Polymer chain A | Polymer chain B | A (0.4) | AA (87/100) | A (7H) |
| EX 2 | SiO₂,SQ | Polymer chain A | Polymer chain B | A (0.4) | A (82/100) | A (7H) |
| EX 3 | SiO₂ | Polymer chain A | Polymer chain B | A (0.3) | A (70/100) | A (7H) |
| EX 4 | SiO₂ | Polymer chain A | Polymer chain B | A (0.4) | A (83/100) | A (6H) |
| EX 5 | SiO₂ | Polymer chain A | Polymer chain B | A (0.3) | AA (86/100) | A (6H) |
| EX 6 | SiO₂ | Polymer chain A | Polymer chain B | A (0.4) | A (81/100) | A (7H) |
| EX 7 | SiO₂,SQ | Polymer chain A | Polymer chain B | A (0.4) | AA (86/100) | A (6H) |
| EX 8 | SiO₂,SQ | Polymer chain A | Polymer chain B | A (0.3) | A (80/100) | A (7H) |
| EX 9 | SiO₂,SQ | Polymer chain A | Polymer chain B | A (0.4) | A (71/100) | A (6H) |
| EX 10 | SiO₂,SQ | Polymer chain A | Polymer chain B | A (0.2) | AA (98/100) | A (6H) |
| EX 11 | SiO₂,SQ | Polymer chain A | Polymer chain B | A (0.3) | A (70/100) | A (6H) |
| EX 12 | SiO₂,SQ | Polymer chain A | Polymer chain B | A (0.3) | AA (85/100) | A (7H) |
| EX 13 | SiO₂,SQ | Polymer chain A | Polymer chain B | A (0.3) | AA (87/100) | A (7H) |
| CE 1 | SiO₂ | Polymer chain A | - | B (4.8) | B (58/100) | A (7H) |
| CE 2 | SiO₂,SQ | Polymer chain A | - | B (4.3) | B (17/100) | A (6H) |

| | | | | | | |
|---|---|---|---|---|---|---|
| EX: Example CE: Comparative Example | | | | | | |

"SiO₂" represents silica dioxide (SiO₂) forming the core portion.

"SQ" represents silsesquioxane forming the core portion.

The parenthesized numeral value or sign for each evaluation in "Evaluation results" refers to an evaluation result of each example.

Table 1 demonstrates that the film of the present disclosure achieves the desired effects.

### DESCRIPTION OF SYMBOLS

- 100: core-shell particle
- 102: core portion
- 104: first shell portion
- 106: second shell portion
- 10: spectacle lens
- 12: plastic spectacle lens base
- 14: film (hard coat layer)

## Claims

1. A film comprising core-shell particles each having a core portion, a first shell portion covering the core portion, and a second shell portion covering the first shell portion,
wherein the core portion contains inorganic oxide particles or silsesquioxane,
the first shell portion contains a polymer chain A including one or more selected from the group consisting of acrylate-based polymer chains and methacrylate-based polymer chains, and
the second shell portion contains a polymer chain B obtained by cationic polymerization of an oxetanyl group of an oxetanyl group-containing compound.

2. The film according to claim 1,
wherein the inorganic oxide particles contain one or more selected from the group consisting of SiO₂, Al₂O₃, SnO₂, ZrO₂, and TiO₂.

3. The film according to claim 1 or 2, further comprising a polymer compound.

4. The film according to any one of claims 1 to 3,
wherein the polymer chain A is a polymer chain obtained by living radical polymerization.

5. A spectacle lens comprising:
a spectacle lens base; and
the film according to any one of claims 1 to 4 disposed on or above the spectacle lens base.

6. A composition comprising core-shell particles each having a core portion, a first shell portion covering the core portion, and a second shell portion covering the first shell portion,
wherein the core portion contains inorganic oxide particles or silsesquioxane,
the first shell portion contains a polymer chain A including one or more selected from the group consisting of acrylate-based polymer chains and methacrylate-based polymer chains, and
the second shell portion contains a polymer chain B obtained by cationic polymerization of an oxetanyl group of an oxetanyl group-containing compound.

7. The composition according to claim 6, further comprising a polymerizable compound.

8. The composition according to claim 6 or 7, further comprising a polymerization initiator.

## Patentansprüche

1. Folie, umfassend Kern-Schale-Partikel, die jeweils einen Kernanteil, einen ersten Schalenanteil, der den Kernanteil bedeckt, und einen zweiten Schalenanteil, der den ersten Schalenanteil bedeckt, aufweisen,
wobei der Kernanteil anorganische Oxidpartikel oder Silsesquioxan enthält,
der erste Schalenanteil eine Polymerkette A enthält, die eines oder mehrere, ausgewählt aus der Gruppe, bestehend aus Polymerketten auf Acrylatbasis und Polymerketten auf Methacrylatbasis, einschließt, und
der zweite Schalenanteil eine Polymerkette B enthält, die durch kationische Polymerisation einer Oxetanylgruppe einer oxetanylgruppenhaltigen Verbindung erhalten wird.

2. Folie gemäß Anspruch 1,
wobei die anorganischen Oxidpartikel eines oder mehrere, ausgewählt aus der Gruppe, bestehend aus SiO₂, Al₂O₃, SnO₂, ZrO₂ und TiO₂, enthalten.

3. Folie gemäß Anspruch 1 oder 2, ferner umfassend eine Polymerverbindung.

4. Folie gemäß einem der Ansprüche 1 bis 3,
wobei die Polymerkette A eine Polymerkette ist, die durch eine lebende radikalische Polymerisation erhalten wird.

5. Brillenglas, umfassend:
eine Brillenglasbasis und
die Folie gemäß einem der Ansprüche 1 bis 4, angeordnet auf oder über der Brillenglasbasis.

6. Zusammensetzung, umfassend Kern-Schale-Partikel, die jeweils einen Kernanteil, einen ersten Schalenanteil, der den Kernanteil bedeckt, und einen zweiten Schalenanteil, der den ersten Schalenanteil bedeckt, aufweisen,
wobei der Kernanteil anorganische Oxidpartikel oder Silsesquioxan enthält,
der erste Schalenanteil eine Polymerkette A enthält, die eines oder mehrere, ausgewählt aus der Gruppe, bestehend aus Polymerketten auf Acrylatbasis und Polymerketten auf Methacrylatbasis, einschließt, und
der zweite Schalenanteil eine Polymerkette B enthält, die durch kationische Polymerisation einer Oxetanylgruppe einer oxetanylgruppenhaltigen Verbindung erhalten wird.

7. Zusammensetzung gemäß Anspruch 6, ferner umfassend eine polymerisierbare Verbindung.

8. Zusammensetzung gemäß Anspruch 6 oder 7, ferner umfassend einen Polymerisationsinitiator.

## Revendications

1. Film comprenant des particules noyau-enveloppe présentant chacune une partie noyau, une première partie enveloppe recouvrant la partie noyau, et une deuxième partie enveloppe recouvrant la première partie enveloppe,
dans lequel la partie noyau contient des particules d'oxyde inorganique ou du silsesquioxane,
la première partie enveloppe contient une chaîne polymère A incluant une ou plusieurs chaînes polymères sélectionnées parmi le groupe consistant en des chaînes polymères à base d'acrylate et des chaînes polymères à base de méthacrylate, et
la deuxième partie enveloppe contient une chaîne polymère B obtenue par polymérisation cationique d'un groupe oxétanyle d'un composé contenant un groupe oxétanyle.

2. Film selon la revendication 1,
dans lequel les particules d'oxyde inorganique contiennent un ou plusieurs oxydes sélectionnés parmi le groupe consistant en SiO₂, Al₂O₃, SnO₂, ZrO₂, et TiO₂.

3. Film selon la revendication 1 ou la revendication 2, comprenant en outre un composé polymère.

4. Film selon l'une quelconque des revendications 1 à 3,
dans lequel la chaîne polymère A est une chaîne polymère obtenue par polymérisation radicalaire vivante.

5. Verre de lunettes comprenant :
une base de verre de lunettes ; et
le film selon l'une quelconque des revendications 1 à 4 disposé sur ou au-dessus de la base de verre de lunettes.

6. Composition comprenant des particules noyau-enveloppe présentant chacune une partie noyau, une première partie enveloppe recouvrant la partie noyau, et une deuxième partie enveloppe recouvrant la première partie enveloppe,
dans laquelle la partie noyau contient des particules d'oxyde inorganique ou du silsesquioxane,
la première partie enveloppe contient une chaîne polymère A incluant une ou plusieurs chaînes polymères sélectionnées parmi le groupe consistant en des chaînes polymères à base d'acrylate et des chaînes polymères à base de méthacrylate, et
la deuxième partie enveloppe contient une chaîne polymère B obtenue par polymérisation cationique d'un groupe oxétanyle d'un composé contenant un groupe oxétanyle.

7. Composition selon la revendication 6, comprenant en outre un composé polymérisable.

8. Composition selon la revendication 6 ou la revendication 7, comprenant en outre un initiateur de polymérisation.
